# FASCICULE DE BREVET EUROPEEN

(11) **EP 3 809 210 B1**
(45) Date de publication et mention de la délivrance du brevet: **27.07.2022**
(21) Numéro de dépôt: 20201494.0
(22) Date de dépôt: 13.10.2020
(51) Int. Cl.: G04G 19/00

(54) **DISPOSITIF ÉLECTRONIQUE DE GESTION DE L'ALIMENTATION ÉLECTRIQUE D'UN APPAREIL ÉLECTROMENAGER**
ELEKTRONISCHE VORRICHTUNG ZUR STEUERUNG DER STROMVERSORGUNG EINES ELEKTROHAUSHALTSGERÄTS
ELECTRONIC DEVICE FOR MANAGING THE POWER SUPPLY OF A HOUSEHOLD APPLIANCE

(30) Priorité: 15.10.2019 FR 1911456
(43) Date de publication de la demande: 21.04.2021
(73) Titulaire: SEB S.A., 69130 Ecully (FR)
(72) Inventeur: LEBUFFE, Gilles, 50890 CONDE-SUR-VIRE (FR)
(74) Mandataire: SEB Développement

(56) Documents cités:
- EP-A1- 1 574 920
- EP-A2- 2 282 241
- JP-A- 2005 201 587
- US-A1- 2014 169 047

## Description

### Domaine technique

La présente invention se rapporte au domaine des appareils électroménagers, et plus précisément à l'alimentation électrique d'un appareil électroménager branché sur un réseau électrique configuré pour délivrer un courant alternatif à une fréquence donnée.

Beaucoup d'appareils électroménagers modernes nécessitent de connaître l'écoulement du temps réel, c'est-à-dire de permettre un décompte très précis du temps, notamment en vue de dater ou déclencher des événements selon l'heure. Il peut s'agir par exemple de mettre en œuvre une temporisation pour un départ différé, ou encore de programmer un déclenchement d'un fonctionnement.

A cette fin, une solution consiste à munir l'appareil électroménager d'une horloge temps réel, couramment désignée par l'acronyme RTC pour l'anglais "real-time clock". Une telle horloge temps réel utilise souvent un quartz piézoélectrique, qui oscille à une fréquence précise (typiquement 32.768 kHz soit 215 cycles par secondes). Un compteur simple permet alors de suivre le temps réel.

Une telle solution, si elle a prouvé son efficacité, n'est pas toujours optimale. Tout d'abord, l'horloge temps réel requiert une alimentation électrique, typiquement fournie par une batterie (incluant tout type de stockage d'énergie électrique tel que les condensateurs). Or, si cette batterie n'est pas rechargeable, les fonctionnalités associées à la connaissance du temps réel deviennent tributaires d'opérations de remplacement de cette batterie, ce qui est un inconvénient important pour les produits grands publics. Si la batterie est rechargeable, il est nécessaire de munir l'appareil d'un circuit de charge de la batterie. En outre, la nécessité d'assurer un grand nombre de cycles de déchargement-chargement, générateurs de vieillissement des composants électriques, impose un surdimensionnement des composants électriques telles que la batterie. Il en résulte des coûts non négligeables.

Une autre solution est d'exploiter les fréquences du réseau d'alimentation électrique. La plupart des réseaux électriques du monde délivrent un courant alternatif dont la fréquence est maintenue à une valeur constante soit de 50 Hz, soit de 60 Hz. La régularité de la fréquence du réseau peut ainsi être utilisée comme référence de cadence du temps, en synchronisation avec le réseau d'alimentation. Plus précisément, ce sont les passages à zéro (deux par cycles) de la tension d'alimentation, qui sont détectés par l'appareil électrique et qui permettent, par un compteur, de connaître l'écoulement du temps réel. Un tel système de détection de passage a zéro est divulgué dans le document JP 2005201587.

Cette solution nécessite toutefois que l'appareil électroménager reste branché au réseau électrique, et qu'une alimentation électrique soit établie. Il en résulte une consommation électrique par l'appareil électroménager uniquement pour conserver la détection du temps réel, et donc même lorsque l'appareil électroménager est dans un mode de veille, par exemple en attente d'un fonctionnement programmé.

Afin de réduire la consommation électrique lors de ces périodes de veille tout en maintenant la synchronisation avec le réseau d'alimentation, il est prévu de munir l'appareil électroménager d'un dispositif électronique de gestion de l'alimentation électrique, raccordé au réseau électrique, qui présente une résistance chutrice en série avec la borne de connexion au réseau électrique. La résistance chutrice permet de générer un signal de tension image de la tension d'alimentation fournie par le réseau électrique, permettant la synchronisation avec le réseau d'alimentation tout en induisant, grâce à sa forte résistivité, une forte chute de tension et donc une faible consommation électrique pendant la période de veille.

Afin de limiter la consommation électrique pendant un mode de veille de l'appareil électroménager, la valeur de résistance de la résistance chutrice devrait être très élevée, par exemple de plusieurs dizaines de mégaohms. Toutefois, une forte valeur de résistance pour la résistance chutrice entraîne un décalage des passages à zéro du signal de tension image par rapport aux passages à zéro de la tension du réseau d'alimentation, qui peut alors atteindre plusieurs millisecondes. Or, ce décalage des passages à zéro a de fortes conséquences lors du fonctionnement opérationnel de l'appareil électroménager, lorsqu'il s'agit de piloter des composants électroniques telles que les triacs, qui requièrent la meilleure synchronisation possible entre leur commande et l'évolution de la tension d'alimentation. Il est typiquement souhaitable que ce décalage soit inférieur à 500 µs, et donc la valeur de résistance de la résistance chutrice ne peut pas être trop élevée.

La valeur de résistance de la résistance chutrice doit résulter donc d'un compromis, et il est alors impossible de réduire de manière satisfaisante la consommation électrique dans un mode de veille de l'appareil électroménager. A titre d'exemple, une valeur de résistance de la résistance chutrice de 1 MΩ pour une tension d'alimentation efficace de 230 V fournie par le réseau d'alimentation entraîne une perte de consommation d'une puissance de 53 mW, ce qui n'est pas négligeable étant donné les longues périodes de veille.

### Présentation de l'invention

L'invention vise à permettre une diminution significative de la consommation électrique d'un appareil électroménager dans un mode de veille, tout en permettant une grande précision de synchronisation avec un réseau d'alimentation électrique lorsque l'appareil électroménager est en mode de fonctionnement opérationnel, sans requérir à une source de mesure du temps autonome telle qu'une horloge temps réel à quartz.

A cet effet, l'invention propose un dispositif électronique de gestion de l'alimentation électrique d'un appareil électroménager présentant un mode de veille et un mode de fonctionnement opérationnel, comprenant :
- une borne de connexion à un réseau électrique configuré pour délivrer un courant alternatif à une fréquence donnée,
- une première résistance chutrice connectée à la borne de connexion et présentant une première valeur de résistance,
- une seconde résistance chutrice montée en série avec la première résistance chutrice entre la borne de connexion et une sortie du dispositif électronique de gestion de l'alimentation électrique, et présentant une seconde valeur de résistance au moins deux fois supérieure à la valeur de la première résistance, et,
- un circuit de dérivation monté en parallèle de la seconde résistance chutrice, et commandable entre un mode bloquant et un mode passant,
le circuit de dérivation étant configuré pour être dans le mode bloquant dans le mode de veille de l'appareil électroménager, et pour être dans le mode passant dans le mode de fonctionnement opérationnel de l'appareil électroménager,
caractérisé en ce que le dispositif électronique comprend en outre un système de détection de passage à zéro (6) de la tension d'alimentation du réseau d'alimentation, monté en parallèle avec au moins la seconde résistance chutrice.

La présence d'une seconde résistance chutrice montée en série avec la première résistance chutrice pouvant être court-circuitée par le circuit de dérivation permet de limiter la consommation électrique dans le mode de veille de l'appareil électroménager, tout en permettant de réduire la consommation électrique et le décalage par rapport aux passages à zéro du réseau d'alimentation dans le mode de fonctionnement opérationnel de l'appareil électroménager.

Le dispositif est avantageusement complété par les différentes caractéristiques suivantes prises seules ou selon leurs différentes combinaisons possibles :
- la valeur de la seconde résistance est au moins cinq fois supérieure à la valeur de la première résistance ;
- la valeur de la première résistance est inférieure à 1 MΩ et la valeur de la seconde résistance est supérieure à 2 MΩ ;
- la première résistance chutrice est connectée à la borne de connexion et à un nœud commun. La seconde résistance chutrice est connectée au nœud commun et à la sortie du dispositif électronique de gestion de l'alimentation électrique. Le circuit de dérivation est connecté au nœud commun et à la sortie du dispositif électronique de gestion de l'alimentation électrique ;
- le circuit de dérivation est configuré pour recevoir un signal de mode représentatif du mode en veille ou du mode de fonctionnement opérationnel de l'appareil électroménager, un signal de commande dérivé dudit signal de mode définissant le mode bloquant ou le mode passant du circuit de dérivation ;
- le circuit de dérivation comprend un triac monté en parallèle de la seconde résistance chutrice, le triac étant configuré pour recevoir le signal de commande sur sa gâchette ;
- le circuit de dérivation comprend un interrupteur commandé par le signal de commande, l'interrupteur est un relais électromécanique, un transistor ou un thyristor ;
- le circuit de dérivation comprend un optocoupleur.

L'invention concerne également un appareil électroménager comprenant un dispositif électronique de gestion de l'alimentation électrique d'un appareil électroménager selon l'invention.

### Présentation des figures

D'autres caractéristiques, buts et avantages de l'invention ressortiront de la description qui suit, qui est purement illustrative et non limitative, et qui doit être lue en regard de l'unique dessin annexé :

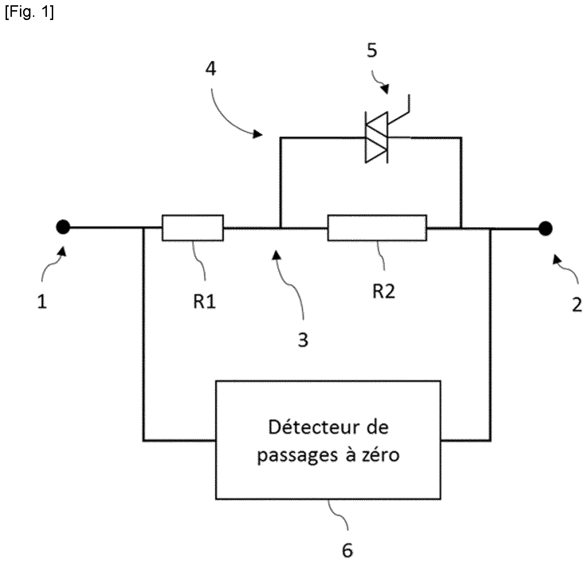

La figure 1 montre un schéma de principe d'une configuration d'un dispositif électronique de gestion de l'alimentation électrique selon un mode de réalisation possible de l'invention

### Description détaillée

L'appareil électroménager est ici un appareil utilisant de l'électricité et destiné à assurer des besoins domestiques. Il peut s'agir aussi bien d'un appareil du petit électroménager que d'un appareil du gros électroménager, et désigne des appareils aussi divers que les machines à café Espressos, les aspirateurs, les robots de cuisine, les fours et lave-linges. Les appareils électroménagers concernés ici sont ceux destinés à rester branchés à un réseau électrique, et aptes à passer d'un mode de veille à un mode de fonctionnement opérationnel. Un mode de fonctionnement opérationnel se caractérise par la réalisation de fonctions consommatrices d'énergie électrique et correspondant aux fonctionnalités essentielles d'un appareil électroménager. Par exemple, dans un mode de fonctionnement opérationnel, un robot de cuisine fait tourner un moteur entraînant un outil et/ou fait chauffer des aliments. A l'opposé, un mode de veille se caractérise par le fait que la plupart des fonctionnalités de l'appareil électroménager ne sont pas actives, et correspond à un mode de moindre consommation électrique. Le passage d'un mode de veille à un mode de fonctionnement opérationnel se fait typiquement via une action d'un utilisateur, tel que l'appui d'un bouton ou par commande vocale. De même, le passage d'un mode de fonctionnement opérationnel à un mode de veille peut se faire par l'action d'un utilisateur, ou parce qu'une condition pré-établie a été remplie, par exemple l'écoulement d'un temps sans interaction avec l'utilisateur ou parce qu'une fonction a été réalisée. Il est à noter qu'il est courant que l'appareil électroménager soit dans son mode de veille la grande majorité du temps.

Le réseau électrique délivre un courant alternatif à une fréquence donnée et à une tension donnée, par exemple une tension efficace de 230 V à 50 Hz en Union Européenne. Un appareil électroménager est alimenté en électricité par le réseau électrique via un dispositif électronique de gestion de l'alimentation électrique intégré dans l'appareil électroménager. Le dispositif électronique de gestion de l'alimentation électrique sert à l'alimentation électrique de l'appareil électroménager aussi bien dans le mode de veille que dans le mode de fonctionnement opérationnel.

Le dispositif électronique de gestion de l'alimentation électrique comprend une borne de connexion 1 pour la connexion de l'appareil électroménager au réseau électrique. Cette connexion prend typiquement la forme d'une fiche électrique se raccordant à une prise électrique liée au réseau électrique. La borne de connexion 1 est donc l'interface de l'appareil électroménager qui permet son alimentation électrique via la fiche électrique. On définira cette borne de connexion 1 comme étant en amont de l'alimentation électrique.

Le dispositif électronique de gestion de l'alimentation électrique présente deux résistances en série :
- une première résistance chutrice R1 connectée à la borne de connexion 1, et typiquement connectée à un nœud commun 3, et
- une seconde résistance chutrice R2 montée en série avec la première résistance chutrice R1 entre la borne de connexion 1 et une sortie 2 du dispositif électronique de gestion de l'alimentation électrique. De préférence, la seconde résistance chutrice R2 est connectée au nœud commun 3 et à la sortie 2 du dispositif électronique de gestion de l'alimentation électrique.

La première résistance chutrice R1 présente une valeur de la première résistance, et la seconde résistance chutrice R2 présente une seconde valeur de résistance, qui est au moins deux fois supérieure à la valeur de la première résistance. De préférence, la valeur de la seconde résistance est au moins cinq fois supérieure à la valeur de la première résistance, et de préférence encore la valeur de la seconde résistance est au moins dix fois supérieure à la valeur de la première résistance.

Notamment, la valeur de la première résistance est de préférence inférieure à 1MΩ, et de préférence encore inférieure à 500 KΩ. De préférence toutefois, la valeur de la première résistance est supérieure à 50 KΩ. La valeur de la seconde résistance est de préférence supérieure à 2 MΩ. De préférence encore, la valeur de la seconde résistance est supérieure à 5 MΩ. Par exemple, la première résistance chutrice R1 peut être de 150 KΩ et la seconde résistance chutrice R2 peut être de 8 MΩ.

La première résistance chutrice R1 et la seconde résistance chutrice R2 sont électriquement en série entre la borne de connexion 1 et une sortie 2 du dispositif électronique de gestion de l'alimentation électrique. La sortie 2 du dispositif électronique de gestion de l'alimentation électrique est la sortie qui permet l'alimentation des circuits électroniques de l'appareil électroménager en aval du dispositif électronique de gestion de l'alimentation électrique.

De préférence, ainsi qu'illustré sur la figure 1, la première résistance chutrice R1 est en amont de la seconde résistance chutrice R2. La première résistance chutrice R1 est donc connectée à la borne de connexion 1 et à un nœud commun 3, et la seconde résistance chutrice R2 est connectée au nœud commun 3 et à la sortie 2 du dispositif électronique de gestion de l'alimentation électrique.

Le dispositif électronique de gestion de l'alimentation électrique comprend un circuit de dérivation 4 monté en parallèle de la seconde résistance chutrice R2, qui est commandable entre un mode bloquant et un mode passant. Dans le mode bloquant, le circuit de dérivation 4 s'oppose au passage du courant électrique, et peut donc être considéré comme un circuit ouvert. Dans le mode passant, le circuit de dérivation 4 ne s'oppose pas au passage du courant électrique, ayant une impédance très faible (avec une valeur de résistance inférieure négligeable, très inférieure à la valeur de la première résistance), et peut donc être assimilé à un fil conducteur.

De préférence, comme illustré sur la figure 1, le circuit de dérivation 4 est connecté au nœud commun 3 et à la sortie 2 du dispositif électronique de gestion de l'alimentation électrique.

Le circuit de dérivation 4 est configuré pour être dans le mode bloquant dans un mode de veille de l'appareil électroménager, et pour être dans le mode passant dans le mode de fonctionnement opérationnel de l'appareil électroménager. Le circuit de dérivation 4 peut par exemple recevoir un signal de mode représentatif du mode de veille et/de fonctionnement opérationnel de l'appareil électroménager, voire représentatif d'un passage de l'un à l'autre. Ce signal de mode peut se traduire par un signal de commande définissant le mode bloquant ou le mode passant du circuit de dérivation 4, reçu par le dispositif électronique de gestion de l'alimentation électrique en tant que signal de mode ou généré par le dispositif électronique de gestion de l'alimentation électrique à partir d'un signal de mode reçu.

Afin de pouvoir passer du mode bloquant au mode passant, et vice-versa, le circuit de dérivation 4 comprend un interrupteur commandé par le signal de commande. Cet interrupteur peut être de tout type approprié. Par exemple, l'interrupteur peut être un relais électromécanique, un transistor ou un thyristor.

De préférence toutefois, le circuit de dérivation 4 comprend un triac 5 monté en parallèle de la seconde résistance chutrice R2, le triac étant configuré pour recevoir sur sa gâchette le signal de commande dérivé du signal de mode représentatif du mode en veille ou du mode de fonctionnement opérationnel de l'appareil électroménager. Le triac fait alors office d'interrupteur. De préférence, le circuit de dérivation 4 comprend un optocoupleur. De préférence encore, le circuit de dérivation 4 comprend un optotriac intégrant un triac et un optocoupleur.

Dans un mode de veille de l'appareil électroménager, le circuit de dérivation 4 est dans un mode bloquant. Un circuit équivalent entre la borne de connexion 1 et la sortie 2 est alors constitué par la première résistance chutrice R1 en série avec la seconde résistance chutrice R2. La mise en série de la première résistance chutrice R1 en série avec la seconde résistance chutrice R2, résulte en une résistante équivalente de forte valeur, typiquement supérieure à 3 MΩ, par l'addition de la valeur de la première résistance et de la valeur de la seconde résistance. Par conséquent, la consommation électrique en mode de veille est très faible. A titre d'exemple, avec une résistance équivalente de 5 MΩ pour une tension d'alimentation efficace de 230 V fournie par le réseau d'alimentation, la puissance de perte n'est plus que de 11 mW. De préférence, les valeurs de résistance de la première résistance chutrice R1 et de la seconde résistance chutrice R2 sont choisie pour obtenir une perte par effet joule inférieure à 10 mW.

Dans un mode de fonctionnement opérationnel de l'appareil électroménager, le circuit de dérivation 4 est dans un mode passant. Le circuit de dérivation 4 en quelque sorte court-circuite la seconde résistance chutrice R2. Un circuit équivalent entre la borne de connexion 1 et la sortie 2 est alors constitué par la première résistance chutrice R1 en série avec le circuit de dérivation 4. La résistance équivalente entre la borne de connexion 1 et la sortie 2 est alors essentiellement constituée par la valeur de la première résistance, la résistance du circuit de dérivation 4 étant négligeable, et est donc typiquement inférieure à 1 MΩ, et de préférence inférieure à 500 KΩ. Il résulte de cette faible résistance équivalente un faible décalage des passages à zéro du signal de tension image par rapport aux passages à zéro de la tension du réseau d'alimentation. Typiquement, le décalage obtenu est inférieur à 500 µs. Ce faible décalage permet de déterminer précisément les passages à zéro de la tension du réseau d'alimentation, afin de piloter efficacement des composants électroniques telles que les triacs, dont la commande doit être synchronisée avec l'évolution de la tension.

Afin de permettre d'exploiter les passages à zéro de la tension entre la borne de connexion 1 et la sortie 2 du dispositif électronique de gestion de l'alimentation électrique, qui est une tension image de la tension du réseau d'alimentation, le dispositif électronique de gestion de l'alimentation électrique comprend un système de détection de passage à zéro 6 de la tension d'alimentation du réseau d'alimentation, monté en parallèle avec au moins la seconde résistance chutrice R2. Par exemple, le système de détection de passage à zéro 6 peut être incorporé dans le circuit de dérivation 4, typiquement en combinaison avec un optotriac.

Il est également possible, comme dans l'exemple illustré, que le système de détection de passage à zéro 6 soit monté en parallèle de la première résistance chutrice R1 et de la seconde résistance chutrice R2, et donc connecté à la borne de connexion 1 d'un côté et à la sortie 2 du dispositif électronique de gestion de l'alimentation électrique de l'autre côté.

Grâce à la configuration décrite, le système de détection de passage à zéro 6 exploite comme tension image la tension s'établissant entre la borne de connexion 1 et la sortie 2, résultant :
- dans le mode de veille, d'une valeur de résistance équivalente élevée, avec un décalage ne portant pas à conséquence,
- dans le mode de fonctionnement opérationnel, d'une valeur de résistance équivalente plus faible causée par le court-circuitage de la seconde résistance chutrice R2 par le circuit de dérivation 4, entraînant un moindre décalage de la détection, et donc une meilleure précision de la synchronisation des commandes des composants avec les variations de la tension d'alimentation.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection des revendications.

## Revendications

1. Dispositif électronique de gestion de l'alimentation électrique d'un appareil électroménager présentant un mode de veille et un mode de fonctionnement opérationnel, comprenant :
- une borne de connexion (1) à un réseau électrique configuré pour délivrer un courant alternatif à une fréquence donnée,
- une première résistance chutrice (R1) connectée à la borne de connexion (1) et présentant une première valeur de résistance,
le dispositif électronique de gestion de l'alimentation électrique comprenant :
- une seconde résistance chutrice (R2) montée en série avec la première résistance chutrice (R1) entre la borne de connexion (1) et une sortie (2) du dispositif électronique de gestion de l'alimentation électrique, et présentant une valeur de la seconde résistance au moins deux fois supérieure à la valeur de la première résistance, et,
- un circuit de dérivation (4) monté en parallèle de la seconde résistance chutrice (R2), et commandable entre un mode bloquant et un mode passant,
le circuit de dérivation (4) étant configuré pour être dans le mode bloquant dans un mode de veille de l'appareil électroménager, et pour être dans le mode passant dans le mode de fonctionnement opérationnel de l'appareil électroménager,
**caractérisé en ce que** le dispositif électronique comprend en outre un système de détection de passage à zéro (6) de la tension d'alimentation du réseau d'alimentation, monté en parallèle avec au moins la seconde résistance chutrice (R2).

2. Dispositif électronique de gestion de l'alimentation électrique d'un appareil électroménager selon la revendication 1, dans lequel la valeur de la seconde résistance est au moins cinq fois supérieure à la valeur de la première résistance.

3. Dispositif électronique de gestion de l'alimentation électrique d'un appareil électroménager selon l'une quelconque des revendications précédentes, dans lequel la valeur de la première résistance est inférieure à 1 MΩ et la valeur de la seconde résistance est supérieure à 2 MΩ.

4. Dispositif électronique de gestion de l'alimentation électrique d'un appareil électroménager selon l'une quelconque des revendications précédentes, dans lequel la première résistance chutrice (R1) est connectée à la borne de connexion (1) et à un nœud commun (3), la seconde résistance chutrice (R2) est connectée au nœud commun (3) et à la sortie (2) du dispositif électronique de gestion de l'alimentation électrique, et le circuit de dérivation (4) est connecté au nœud commun (3) et à la sortie (2) du dispositif électronique de gestion de l'alimentation électrique.

5. Dispositif électronique de gestion de l'alimentation électrique d'un appareil électroménager selon l'une quelconque des revendications précédentes, dans lequel le circuit de dérivation (4) est configuré pour recevoir un signal de mode représentatif du mode en veille ou du mode de fonctionnement opérationnel de l'appareil électroménager, un signal de commande dérivé dudit signal de mode définissant le mode bloquant ou le mode passant du circuit de dérivation (4).

6. Dispositif électronique de gestion de l'alimentation électrique d'un appareil électroménager selon la revendication 5, dans lequel le circuit de dérivation (4) comprend un triac (5) monté en parallèle de la seconde résistance chutrice (R2), le triac étant configuré pour recevoir le signal de commande sur sa gâchette.

7. Dispositif électronique de gestion de l'alimentation électrique d'un appareil électroménager selon la revendication 5, dans lequel le circuit de dérivation (4) comprend un interrupteur commandé par le signal de commande, l'interrupteur est un relais électromécanique, un transistor ou un thyristor.

8. Dispositif électronique de gestion de l'alimentation électrique d'un appareil électroménager selon l'une quelconque des revendications précédentes, dans lequel le circuit de dérivation (4) comprend un optocoupleur.

9. Appareil électroménager comprenant un dispositif électronique de gestion de l'alimentation électrique d'un appareil électroménager selon l'une quelconque des revendications 1 à 8.

## Patentansprüche

1. Elektronische Vorrichtung zur Verwaltung der Stromversorgung einer Elektrohaushaltseinrichtung, die einen Standby-Modus und einen Betriebsmodus aufweist, umfassend:
- einen Verbindungsanschluss (1) an ein Stromnetz, der konfiguriert ist, um einen Wechselstrom bei einer gegebenen Frequenz zu liefern,
- einen ersten Vorwiderstand (R1), die mit dem Verbindungsanschluss (1) verbunden ist und einen ersten Widerstandswert aufweist,
wobei die elektronische Vorrichtung zur Verwaltung der Stromversorgung umfasst:
- einen zweiten Vorwiderstand (R2), der in Reihe mit dem ersten Vorwiderstand (R1) zwischen dem Verbindungsanschluss (1) und einem Ausgang (2) der elektronische Vorrichtung zur Verwaltung der Stromversorgung geschaltet ist und einen Wert des zweiten Widerstands aufweist, der mindestens zweimal so groß ist wie der Wert des ersten Widerstands, und
- eine Zweigschaltung (4), die parallel zu dem zweiten Vorwiderstand (R2) geschaltet ist und zwischen einem Sperrmodus und einem Durchgangsmodus steuerbar ist,
wobei die Zweigschaltung (4) konfiguriert ist, um in einem Standby-Modus der Elektrohaushaltseinrichtung im Sperrmodus zu sein und um im Betriebsmodus der Elektrohaushaltseinrichtung im Durchgangsmodus zu sein,
**dadurch gekennzeichnet, dass** die elektronische Vorrichtung weiter ein System zum Erfassen eines Nulldurchgangs (6) der Versorgungsspannung des Versorgungsnetzes umfasst, das parallel zu dem mindestens einen zweiten Vorwiderstand (R2) geschaltet ist.

2. Elektronische Vorrichtung zur Verwaltung der Stromversorgung einer Elektrohaushaltseinrichtung nach Anspruch 1, wobei der Wert des zweiten Widerstands mindestens fünfmal so groß ist wie der Wert des ersten Widerstands.

3. Elektronische Vorrichtung zur Verwaltung der Stromversorgung einer Elektrohaushaltseinrichtung nach einem der vorstehenden Ansprüche, wobei der Wert des ersten Widerstands kleiner als 1 MΩ ist und der Wert des zweiten Widerstands größer als 2 MΩ ist.

4. Elektronische Vorrichtung zur Verwaltung der Stromversorgung einer Elektrohaushaltseinrichtung nach einem der vorstehenden Ansprüche, wobei der erste Vorwiderstand (R1) mit dem Verbindungsanschluss (1) und mit einem gemeinsamen Knoten (3) verbunden ist, der zweite Vorwiderstand (R2) mit dem gemeinsamen Knoten (3) und mit dem Ausgang (2) der elektronischen Vorrichtung zur Verwaltung der Stromversorgung verbunden ist und die Zweigschaltung (4) mit dem gemeinsamen Knoten (3) und mit dem Ausgang (2) der elektronischen Vorrichtung zur Verwaltung der Stromversorgung verbunden ist.

5. Elektronische Vorrichtung zur Verwaltung der Stromversorgung einer Elektrohaushaltseinrichtung nach einem der vorstehenden Ansprüche, wobei die Zweigschaltung (4) konfiguriert ist, um ein Modussignal zu empfangen, das den Standby-Modus oder den Betriebsmodus der Elektrohaushaltseinrichtung darstellt, wobei ein von dem Modussignal abgeleitetes Steuerungssignal den Sperrmodus oder den Durchgangsmodus der Zweigschaltung (4) definiert.

6. Elektronische Vorrichtung zur Verwaltung der Stromversorgung einer Elektrohaushaltseinrichtung nach Anspruch 5, wobei die Zweigschaltung (4) einen Triac (5) umfasst, der parallel zu dem zweiten Vorwiderstand (R2) geschaltet ist, wobei der Triac konfiguriert ist, um das Steuerungssignal an seinem Auslöser zu empfangen.

7. Elektronische Vorrichtung zur Verwaltung der Stromversorgung einer Elektrohaushaltseinrichtung nach Anspruch 5, wobei die Zweigschaltung (4) einen von dem Steuerungssignal gesteuerten Schalter umfasst, wobei der Schalter ein elektromechanisches Relais, ein Transistor oder ein Thyristor ist.

8. Elektronische Vorrichtung zur Verwaltung der Stromversorgung einer Elektrohaushaltseinrichtung nach einem der vorstehenden Ansprüche, wobei die Zweigschaltung (4) einen Optokoppler umfasst.

9. Elektrohaushaltseinrichtung, umfassend eine elektronische Vorrichtung zur Verwaltung der Stromversorgung einer Elektrohaushaltseinrichtung nach einem der Ansprüche 1 bis 8.

## Claims

1. Electronic device for managing the power supply of a household appliance having a standby mode and an operational functioning mode, comprising:
- a terminal for connecting (1) to an electric network configured to deliver an alternating current at a given frequency,
- a first ballast resistor (R1) connected to the connecting terminal (1) and having a first resistance value,
the electronic device for managing the power supply comprising:
- a second ballast resistor (R2) mounted in series with the first ballast resistor (R1) between the connecting terminal (1) and an output (2) of the electronic device for managing the power supply, and having a value of the second resistor at least twice greater than the value of the first resistor, and,
- a bypass circuit (4) mounted in parallel to the second ballast resistor (R2), and controllable between a blocking mode and a passing mode,
the bypass circuit (4) being configured to be in the blocking mode in a standby mode of the household appliance, and to be in the passing mode in the operational functioning mode of the household appliance,
**characterised in that** the electronic device further comprises a system for detecting a passage to zero (6) of the supply voltage of the supply network, mounted in parallel with at least the second ballast resistor (R2).

2. Electronic device for managing the power supply of a household appliance according to claim 1, wherein the value of the second resistor is at least five times greater than the value of the first resistor.

3. Electronic device for managing the power supply of a household appliance according to any one of the preceding claims, wherein the value of the first resistor is less than 1 MΩ and the value of the second resistor is greater than 2 MΩ.

4. Electronic device for managing the power supply of a household appliance according to any one of the preceding claims, wherein the first ballast resistor (R1) is connected to the connecting terminal (1) and to a common node (3), the second ballast resistor (R2) is connected to the common node (3) and to the output (2) of the electronic device for managing the power supply, and the bypass circuit (4) is connected to the common node (3) and to the output (2) of the electronic device for managing the power supply.

5. Electronic device for managing the power supply of a household appliance according to any one of the preceding claims, wherein the bypass circuit (4) is configured to receive a mode signal representative of the standby mode or of the operational functional mode of the household appliance, a control signal derived from said mode signal defining the blocking mode or the passing mode of the bypass circuit (4).

6. Electronic device for managing the power supply of a household appliance according to claim 5, wherein the bypass circuit (4) comprises a triac (5) mounted in parallel to the second ballast resistor (R2), the triac being configured to receive the control signal on its trigger.

7. Electronic device for managing the power supply of a household appliance according to claim 5, wherein the bypass circuit (4) comprises a switch controlled by the control signal, the switch is an electromechanical relay, a transistor or a thyristor.

8. Electronic device for managing the power supply of a household appliance according to any one of the preceding claims, wherein the bypass circuit (4) comprises an optocoupler.

9. Household appliance comprising an electronic device for managing the power supply of a household appliance according to any one of claims 1 to 8.
